# EUROPEAN PATENT APPLICATION

(11) **EP 4 311 152 A1**
(43) Date of publication of application: **24.01.2024**
(21) Application number: 22806646.0
(22) Date of filing: 07.05.2022
(51) Int. Cl.: H04L 5/00, H04W 72/04

(54) **METHOD AND APPARATUS FOR DETERMINING UPLINK TRANSMISSION TIME WINDOW, TERMINAL, AND NETWORK SIDE DEVICE**

(30) Priority: 10.05.2021 CN 202110506650
(71) Applicant: Vivo Mobile Communication Co., Ltd., Dongguan, Guangdong 523863 (CN)
(72) Inventor: WANG, Yong, Dongguan, Guangdong 523863 (CN); WU, Kai, Dongguan, Guangdong 523863 (CN); GU, Yi, Dongguan, Guangdong 523863 (CN)
(74) Representative: Winter, Brandl - Partnerschaft mbB
(86) International application number: PCT/CN2022/091439
(87) International publication number: WO 2022/237680

(57) **Abstract**

This application discloses a method and an apparatus for determining an uplink transmission time window, a terminal, and a network-side device, pertaining to the field of communication technologies. The method for determining an uplink transmission time window is performed by a terminal and includes: obtaining a first indication; and determining, based on the first indication and a first rule, a first time window in which one or more uplink transmissions satisfy a first transmission characteristic.

## Description

### CROSS-REFERENCE TO RELATED APPLICATIONS

This application claims priority to Chinese Patent Application No. 202110506650.3, filed in China on May 10, 2021, which is incorporated herein by reference in its entirety.

### TECHNICAL FIELD

This application pertains to the field of communication technologies and specifically relates to a method and an apparatus for determining an uplink transmission time window, a terminal, and a network-side device.

### BACKGROUND

In related art, the function of demodulation reference signal (Demodulation Reference Signal, DMRS) bundling (bundling) has been introduced, which requires that multiple uplink transmissions have stable power and continuous phase within a specific time window so that a network can make joint channel estimation within the time window based on the multiple uplink transmissions, so as to improve its reception performance.

However, due to the UE capability limitation, time division duplexing (Time Division Duplexing, TDD) frame structure, or presence of some slots unavailable for uplink transmission, the length of that time window may exceed a range where UE is capable of ensuring stable power and continuous phase. Further, in the time window, downlink transmissions may be present between the multiple transmissions, or a large number of slots unavailable for uplink transmission may be present. This requires a higher UE capability and even makes it impossible to meet the conditions of stable power and continuous phase. For example, in a time division duplexing (Time Division Duplexing, TDD) frame structure, many downlink (downlink, DL) slots (slots) are present between uplink (uplink, UL) slots. For another example, some transmissions of higher priority may cancel (cancel) a current uplink transmission, making it impossible to meet the conditions of stable power and continuous phase.

### SUMMARY

Embodiments of this application provide a method and an apparatus for determining an uplink transmission time window, a terminal, and a network-side device, enabling a network to make joint channel estimation to improve reception performance and thus improve its coverage capability.

According to a first aspect, an embodiment of this application provides a method for determining an uplink transmission time window, applied to a terminal. The method includes:
obtaining a first indication; and
determining, based on the first indication and a first rule, a first time window in which one or more uplink transmissions satisfy a first transmission characteristic.

According to a second aspect, an embodiment of this application provides a method for determining an uplink transmission time window, applied to a network-side device. The method includes:
sending a first indication to a terminal, where the first indication is used to determine a first time window in which one or more uplink transmissions satisfy a first transmission characteristic.

According to a third aspect, an embodiment of this application provides an apparatus for determining an uplink transmission time window, applied to a terminal and including:
an obtaining module configured to obtain a first indication; and
a processing module configured to determine, based on the first indication and a first rule, a first time window in which one or more uplink transmissions satisfy a first transmission characteristic.

According to a fourth aspect, an embodiment of this application provides an apparatus for determining an uplink transmission time window, applied to a network-side device and including:
a sending module configured to send a first indication to a terminal, where the first indication is used to determine a first time window in which one or more uplink transmissions satisfy a first transmission characteristic.

According to a fifth aspect, a terminal is provided. The terminal includes a processor, a memory, and a program or instructions stored in the memory and capable of running on the processor, and when the program or instructions are executed by the processor, the steps of the method according to the first aspect are implemented.

According to a sixth aspect, a terminal is provided, including a processor and a communication interface. The processor is configured to obtain a first indication, and determine, based on the first indication and a first rule, a first time window in which one or more uplink transmissions satisfy a first transmission characteristic.

According to a seventh aspect, a network-side device is provided. The network-side device includes a processor, a memory, and a program or instructions stored in the memory and capable of running on the processor. When the program or instructions are executed by the processor, the steps of the method according to the second aspect are implemented.

According to an eighth aspect, a network-side device is provided, including a processor and a communication interface. The communication interface is configured to send a first indication to a terminal, where the first indication is used to determine a first time window in which one or more uplink transmissions satisfy a first transmission characteristic.

According to a ninth aspect, a readable storage medium is provided, where a program or instructions are stored in the readable storage medium, and when the program or the instructions are executed by a processor, the steps of the method according to the first aspect are implemented, or the steps of the method according to the second aspect are implemented.

According to a tenth aspect, a chip is provided. The chip includes a processor and a communication interface, the communication interface is coupled to the processor, and the processor is configured to run a program or instructions to implement the method according to the first aspect or the method according to the second aspect.

According to an eleventh aspect, a computer program/program product is provided. The computer program/program product is stored in a non-volatile storage medium, and the program/program product is executed by at least one processor to implement the steps of the method according to the first aspect or the second aspect.

In the embodiments of this application, the terminal determines, based on the first indication and the first rule, the first time window in which the one or more uplink transmissions satisfy the first transmission characteristic, the first time window being an actual time window. In this way, a nominal time window can be further obtained through division based on actual transmission processes or an actual time window can be determined and obtained based on actual transmission processes, to significantly ensure that more consecutive available uplink transmission occasions are within an actual time window, so as to ensure that conditions of stable power and continuous phase can be met within the actual transmission time window. This enables the network to make joint channel estimation to improve reception performance and thus improve its coverage capability.

### BRIEF DESCRIPTION OF DRAWINGS

FIG. 1 is a schematic diagram of a wireless communication system;
FIG. 2 is a schematic flowchart of a method for determining an uplink transmission time window performed by a terminal according to an embodiment of this application;
FIG. 3 is a schematic flowchart of a method for determining an uplink transmission time window performed by a network-side device according to an embodiment of this application;
FIGs. 4 and 6 are schematic diagrams of actual time windows determined based on a first rule according to an embodiment of this application;
FIG. 7 is a schematic diagram of a frequency hopping pattern for actual time windows according to an embodiment of this application;
FIG. 8 is a schematic diagram of actual time windows determined based on a first rule according to another embodiment of this application;
FIGs. 9 and 10 are schematic diagrams of frequency hopping patterns for actual time windows corresponding to another embodiment of this application;
FIG. 11 is a schematic diagram of actual time windows determined based on a first rule according to still another embodiment of this application;
FIGs. 12 to 14 are schematic diagrams of frequency hopping patterns for actual time windows corresponding to still another embodiment of this application;
FIG. 15 is a schematic structural diagram of an apparatus for determining an uplink transmission time window applied to a terminal according to an embodiment of this application;
FIG. 16 is a schematic structural diagram of an apparatus for determining an uplink transmission time window applied to a network-side device according to an embodiment of this application;
FIG. 17 is a schematic diagram of composition of a communication device according to an embodiment of this application;
FIG. 18 is a schematic diagram of composition of a terminal according to an embodiment of this application; and
FIG. 19 is a schematic diagram of composition of a network-side device according to an embodiment of this application.

### DESCRIPTION OF EMBODIMENTS

The following clearly describes the technical solutions in the embodiments of this application with reference to the accompanying drawings in the embodiments of this application. Apparently, the described embodiments are only some rather than all of the embodiments of this application. All other embodiments obtained by persons of ordinary skill in the art based on the embodiments of this application shall fall within the protection scope of this application.

The terms "first", "second", and the like in the specification and claims of this application are used to distinguish between similar objects rather than to describe a specific order or sequence. It should be understood that terms used in this way are interchangeable in appropriate circumstances so that the embodiments of this application can be implemented in other orders than the order illustrated or described herein. In addition, "first" and "second" are usually used to distinguish objects of a same type and do not limit the quantity of objects. For example, there may be one or a plurality of first objects. In addition, "and/or" in the specification and claims represents at least one of connected objects, and the character "/" generally indicates that the contextually associated objects have an "or" relationship.

It is worth noting that the technology described in the embodiments of this application is not limited to long term evolution (Long Term Evolution, LTE)/LTE-Advanced (LTE-Advanced, LTE-A) systems, but may also be used in other wireless communication systems such as code division multiple access (Code Division Multiple Access, CDMA), time division multiple access (Time Division Multiple Access, TDMA), frequency division multiple access (Frequency Division Multiple Access, FDMA), orthogonal frequency division multiple access (Orthogonal Frequency Division Multiple Access, OFDMA), single-carrier frequency division multiple access (Single-carrier Frequency-Division Multiple Access, SC-FDMA), and other systems. The terms "system" and "network" are often used interchangeably in the embodiments of this application. The technologies described may be used in the above-mentioned systems and radio technologies as well as other systems and radio technologies. In the following descriptions, a new radio (New Radio, NR) system is described for an illustration purpose, and NR terms are used in most of the following descriptions, although these technologies may also be applied to other applications than an NR system application, for example, the 6th generation (6th Generation, 6G) communication system.

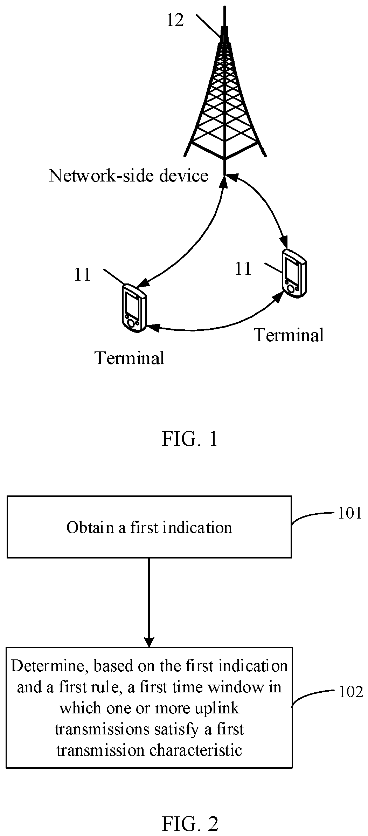

FIG. 1 is a block diagram of a wireless communication system to which embodiments of this application are applicable. The wireless communication system includes a terminal 11 and a network-side device 12. The terminal 11 may also be referred to as a terminal device or user equipment (User Equipment, UE). The terminal 11 may be a terminal-side device, such as a mobile phone, a tablet personal computer (Tablet Personal Computer), a laptop computer (Laptop Computer) or notebook computer, a personal digital assistant (Personal Digital Assistant, PDA), a palmtop computer, a netbook, an ultra-mobile personal computer (ultra-mobile personal computer, UMPC), a mobile internet device (Mobile Internet Device, MID), a wearable device (Wearable Device), vehicular user equipment (VLTE), or pedestrian user equipment (PUE). The wearable device includes a smart watch, a wrist band, earphones, glasses, and the like. It should be noted that the terminal 11 is not limited to a specific type in the embodiments of this application. The network-side device 12 may be a base station or a core network. The base station may be referred to as a NodeB, an evolved NodeB, an access point, a base transceiver station (Base Transceiver Station, BTS), a radio base station, a radio transceiver, a basic service set (Basic Service Set, BSS), an extended service set (Extended Service Set, ESS), a Node B, an evolved node B (eNB), a home NodeB, a home evolved NodeB, a wireless local area network (Wireless Local Area Network, WLAN) access point, a wireless communication technology (WiFi) node, a transmitting receiving point (Transmitting Receiving Point, TRP), or other appropriate terms in the art. Provided that the same technical effects are achieved, the base station is not limited to any specific technical term. It should be noted that in the embodiments of this application, only a base station in a new radio (New Radio, NR) system is used as an example, but the base station is not limited to a specific type. The core network device may be a location management device, for example, a location management function (LMF, E-SLMC).

User equipment (User Equipment, UE) can maintain constant power and continuous phase during multiple physical uplink shared channel (Physical Uplink Shared Channel, PUSCH) transmissions within a certain time window, so in a case of receiving multiple PUSCHs, the network can obtain channel information for other PUSCH transmissions based on a demodulation reference signal (Demodulation Reference Signal, DMRS) for one of the PUSCHs, and therefore, can make joint channel estimation using DMRSs for the multiple PUSCHs, so as to improve the reception performance. This technique is referred to as DMRS bundling. The time window is referred to as a bundling window or time domain window.

The multiple PUSCHs may be repetitions of a same transport block, different transport blocks, or a same transport block processing over multiple slots (slot) (TB processing over multiple slots). The multiple PUSCHs may be transmitted in a same slot or different slots.

The multiple transmissions may be discontinuous transmissions, meaning that in a case that the multiple transmissions have a gap of X symbols or slots, the terminal can keep constant power and continuous phase among the discontinuous transmissions without meeting an off-power requirement (off-power requirement). The off-power requirement refers to a metric requirement that a radiation function should not exceed a predetermined threshold in a case that a transmitter of the terminal is turned off. "Without meeting the requirement" indicates that in the absence of signal transmission, the terminal can keep the transmitter on to keep constant power and continuous phase among the discontinuous transmissions.

The foregoing solution is also applicable to the DMRS bundling optimization for multiple physical uplink control channel (Physical Uplink Control Channel, PUCCH) transmissions.

In the DMRS bundling technology, among multiple uplink transmissions within a certain time window, UE is able to infer channels for other transmissions based on a DMRS of one transmission. For this, in addition to keeping constant transmit power and continuous phase, the UE needs to satisfy some additional conditions including at least one of the following:
the transmit power remains unchanged among the multiple transmissions;
the number of radio bearers (Radio Bearer, RB) allocated in frequency domain remains unchanged among the multiple transmissions;
a gap (gap) between two uplink transmissions does not exceed X symbols (symbol) or slots;
no frequency switching occurs between two uplink transmissions;
no downlink transmission is scheduled between two uplink transmissions; and
a same modulation scheme is used among the multiple transmissions.

A method is needed for dynamically determining or dividing a time window based on actual transmission processes to significantly ensure that more consecutive available uplink transmission occasions are within an actual time window, so as to ensure that conditions of stable power and continuous phase can be met within the actual transmission time window. This enables the network to make joint channel estimation to improve reception performance and thus improve its coverage capability.

An embodiment of this application provides a method for determining an uplink transmission time window, performed by a terminal. As shown in FIG. 2, the method includes the following steps.

Step 101: Obtain a first indication.

Step 102: Determine, based on the first indication and a first rule, a first time window in which one or more uplink transmissions satisfy a first transmission characteristic.

The first time window is an actual time window (actual window).

In this embodiment of this application, the terminal determines, based on the first indication and the first rule, the first time window in which the one or more uplink transmissions satisfy the first transmission characteristic, the first time window being an actual time window. In this way, a nominal time window can be further obtained through division based on actual transmission processes or an actual time window can be determined and obtained based on actual transmission processes, to significantly ensure that more consecutive available uplink transmission occasions are within an actual time window, so as to ensure that conditions of stable power and continuous phase can be met within the actual transmission time window. This enables the network to make joint channel estimation to improve reception performance and thus improve its coverage capability.

In some embodiments, the obtaining a first indication includes any one of the following:
obtaining the first indication that is predefined, where for example, the first indication indicates by default that a nominal time window is equal to the number of slots or symbols corresponding to the number of repetitions (repetitions);
obtaining the first indication that is preconfigured;
obtaining the first indication that is configured through a media access control (MAC) control element (CE);
obtaining the first indication that is configured through a radio resource control (Radio Resource Control, RRC) message; and
obtaining the first indication that is configured through downlink control information (Downlink Control Information, DCI).

In some embodiments, the first indication includes at least one of the following:
size of a second time window, where the second time window is a nominal time window (nominal window), and the size of the nominal time window is a set of consecutive slots, a set of consecutive symbols, and/or a set of consecutive repetitions;
start time of the second time window;
end time of the second time window; and
repetition number N, where N is a positive integer.

In some embodiments, the first rule includes:
a time-domain length corresponding to the uplink transmission(s) is divided into one or more second time windows based on a size of the second time window, where the size of the second time window is defined by a set of slots, a set of symbols, and/or a set of repetitions; and
in a case that the number of symbols or slots or repetitions occupied by a nominal time window is not equal to 0, the nominal time window consists of one or more actual time windows; and the second time window is divided into one or more first time windows in a case that the second time window satisfies at least one of the following first conditions:
   a downlink transmission slot and/or symbol is present;
   symbols unavailable for uplink transmission are more than X, where X is a predefined or preconfigured threshold for limiting the maximum number of discontinuous-transmission symbols with the first transmission characteristic satisfied;
   an uplink transmission on an uplink transmission occasion (occasion) among the uplink transmission(s) is terminated or canceled by a transmission of higher priority;
   the number of consecutive slots or symbols available for uplink transmission exceeds a terminal capability, where the terminal capability means a maximum duration corresponding to transmission(s) for which the terminal is capable of keeping the first transmission characteristic satisfied;
   in a case of frequency hopping being enabled, the number of consecutive slots or symbols available for uplink transmission exceeds a frequency hopping interval (interval) in time domain, where the frequency hopping interval is the number of symbols occupied by or a time gap corresponding to one hop in time domain; and
   the second time window consists of consecutive slots, consecutive symbols, consecutive repetitions, or available uplink slots, where the available uplink slots are slots semi-persistently or dynamically configured for the uplink transmission(s).

In some embodiments, in a case that the nominal time window does not need to be further divided or determined, the nominal time window is the actual time window.

In some embodiments, the first rule further includes:
the following first manner is used to determine a start time of the first time window: a start time of the 1st first time window is a start time of a second time window, and a start time of each other first time window is the 1st orthogonal frequency division multiplexing (OFDM) symbol of a slot corresponding to the 1st actually available uplink transmission following an end time of a previous first time window, or the 1st OFDM symbol of the 1st actually available uplink transmission following the end time of the previous first time window; and
the following second manner is used to determine an end time of the first time window: an end time of the last first time window is an end time of the second time window, and an end time of each other first time window is a time that is a first time gap from a start time of the current first time window, where the first time gap is a minimum value of at least one of the following:
   size of the second time window;
   maximum duration corresponding to transmission(s) for which the terminal is capable of keeping the first transmission characteristic satisfied;
   frequency hopping interval in time domain determined based on a configuration in a case of frequency hopping being enabled;
   time gap between the start time of the current first time window and the 1st OFDM symbol of the 1st downlink transmission slot or symbol following the start time;
   time gap between the start time of the current first time window and the 1st OFDM symbol of a resource following the start time, where the resource is unavailable for uplink transmission and satisfies a second condition, the second condition being that the number of consecutive symbols unavailable for uplink transmission exceeds X, where X is a predefined or preconfigured threshold for limiting the maximum number of discontinuous-transmission symbols with the first transmission characteristic satisfied; and
   time gap between the start time of the current first time window and the 1st OFDM symbol of the 1st uplink transmission following the start time that is terminated or canceled; where
   the first time window consists of a set of actually available slots, symbols, or repetitions for the uplink transmission, where the set of actually available slots, symbols, or repetitions is semi-persistently or dynamically configured.

In some embodiments, for the actual uplink-transmission time window determined based on the first indication and the first rule, the UE is not required to meet the off-power requirement (off-power requirements) in the actual time window.

In some embodiments, in the case of frequency hopping being enabled, each second time window corresponds to a new hop, with a frequency hopping position determined by a first sequence number, where the first sequence number is at least one of the following:
sequence number of the second time window;
sequence number of the 1st or last slot of the second time window;
sequence number of the 1st slot for actual uplink transmission in the second time window; and
sequence number of the 1st repetition for actual uplink transmission in the second time window.

In some embodiments, in the case of frequency hopping being enabled, each first time window corresponds to a new hop, with a frequency hopping position determined by a second sequence number, where the second sequence number is at least one of the following:
sequence number of the first time window;
sequence number of a second time window in which the first time window is located;
sequence number of the 1st or last slot of the first time window; and
sequence number of the 1st or last repetition of the first time window, where the repetition includes nominal repetition (nominal repetition) and actual repetition (actual repetition).

In some embodiments, in a case that two consecutive first time windows are continuous or have a gap of no more than X symbols in time domain, the two consecutive first time windows are able to maintain or use a same frequency hopping position.

In some embodiments, the same frequency hopping position is determined by the 1st time window or the last time window.

In some embodiments, the DCI is DCI for dynamically scheduling a physical uplink shared channel PUSCH or DCI for activating a configured grant type 2 PUSCH.

In some embodiments, the first indication is located in a new first indication field of the DCI or located in at least one of the following indication fields of the DCI:
transmit power control command (TPC command);
time domain resource assignment TDRA (Time Domain Resource Assignment, TDRA);
precoding information and number of layers (Precoding Information and Number of Layers); and
antenna ports (Antenna Ports).

In some embodiments, the start time of the second time window is at least one of the following:
the 1st OFDM symbol of a slot corresponding to a current scheduled transmission;
the 1st OFDM symbol of a TDRA corresponding to a current scheduled transmission;
the 1st OFDM symbol of a slot corresponding to the 1st actual transmission of a current scheduled transmission;
the 1st OFDM symbol of the 1st actual transmission of a current scheduled transmission; and
an absolute time with respect to a current scheduled transmission, which is determined by, for example, a slot offset contained in DCI for transmission scheduling.

In some embodiments, the end time of the second time window is at least one of the following:
an end time of the last OFDM symbol of a current scheduled transmission;
an end time that is M second time windows from the start time of the second time window, where M is a positive integer;
an end time that is K first time windows from the start time of the second time window, where K is a positive integer; and
an end time that is a preset time length from the start time of the second time window.

In some embodiments, the first transmission characteristic requires that the one or more uplink transmissions satisfy at least one of the following:
having a same modulation scheme;
having a same frequency position;
having a same bandwidth;
having same transmit power;
having a transmit power difference less than a preset threshold;
having a same beam (Spatial Tx Filter);
having a same transmit precoding matrix indicator (Transmit Pre-coding Matrix Indicator, TPMI);
having a same waveform (DFT-s-OFDM or CP-OFDM);
having a same transport block (Transport Block, TB) for PUSCH;
having same uplink control information (Uplink Control Information, UCI) for physical uplink control channel PUCCH; and
having a same PUCCH format (format) for physical uplink control channel PUCCH.

In the foregoing embodiment, "same" includes being exactly the same and being slightly different from each other.

In some embodiments, the uplink transmission further includes at least one of the following:
PUSCH repetition type (repetition type) A, PUSCH repetition type B, PUSCH transport block processing over multi slots TBoMS (TB processing over multiple slots, TBoMS), PUCCH, and sounding reference signal (SRS).

In the foregoing embodiment, the multiple uplink transmissions may include multiple different uplink physical channels or signals, or may include multiple transmissions of one single uplink physical channel, such as multiple repetitions in a case of transmission of repetitions or multiple slots in a case of TBoMS transmission.

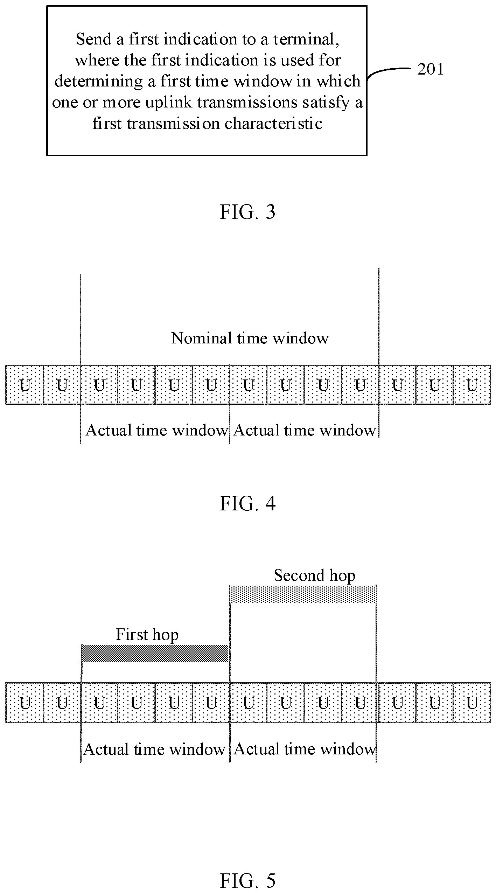

An embodiment of this application provides a method for determining an uplink transmission time window, performed by a network-side device. As shown in FIG. 3, the method includes the following step.

Step 201: Send a first indication to a terminal, where the first indication is used to determine a first time window in which one or more uplink transmissions satisfy a first transmission characteristic.

In some embodiments, the sending a first indication includes any one of the following:
sending the first indication to the terminal through a media access control MAC control element CE;
sending the first indication to the terminal through a radio resource control RRC message; and
sending the first indication to the terminal through downlink control information DCI.

In some embodiments, the first indication includes at least one of the following:
size of a second time window;
start time of the second time window;
end time of the second time window; and
repetition number N, where N is a positive integer.

In some embodiments, the DCI is DCI for dynamically scheduling a physical uplink shared channel PUSCH or DCI for activating a configured grant type 2 PUSCH.

In some embodiments, the first indication is located in a new first indication field of the DCI or located in at least one of the following indication fields of the DCI:
transmit power control command (TPC command);
time domain resource assignment TDRA (Time domain resource assignment);
precoding information and number of layers (Precoding information and number of layers); and
antenna ports (Antenna ports).

In some embodiments, the first transmission characteristic requires that the one or more uplink transmissions satisfy at least one of the following:
having a same modulation scheme;
having a same frequency position;
having a same bandwidth;
having same transmit power;
having a transmit power difference less than a preset threshold;
having a same beam (Spatial Tx Filter);
having a same transmit precoding matrix indicator (TPMI);
having a same waveform (DFT-s-OFDM or CP-OFDM);
having a same transport block (TB) for PUSCH;
having same uplink control information UCI for physical uplink control channel PUCCH; and
having a same PUCCH format for physical uplink control channel PUCCH.

In the foregoing embodiment, "same" includes being exactly the same and being slightly different from each other.

In some embodiments, the uplink transmission further includes at least one of the following:
PUSCH repetition type (repetition type) A, PUSCH repetition type B, PUSCH transport block processing over multi-slot TBoMS, PUCCH, and sounding reference signal SRS.

In the foregoing embodiment, the multiple uplink transmissions may include multiple different uplink physical channels or signals, or may include multiple transmissions of one single uplink physical channel, such as multiple repetitions in a case of transmission of repetitions or multiple slots in a case of TBoMS transmission.

The technical solutions of this application are further described below with reference to the accompanying drawings and specific embodiments.

In an embodiment, it is assumed that a repetition number configured for an uplink repetition type A (PUSCH repetition type A) is 8. According to a predefinition, the size of a nominal time window is determined to be the repetition number, namely, corresponding to 8 slots. Under this setting, the maximum duration corresponding to transmission(s) for which the UE is capable of keeping the first transmission characteristic satisfied is 4 slots. For an FDD system, actual time windows determined based on the first rule are as shown in FIG. 4. If the frequency hopping interval is greater than or equal to 4 slots, the corresponding frequency hopping pattern is as shown in FIG. 5.

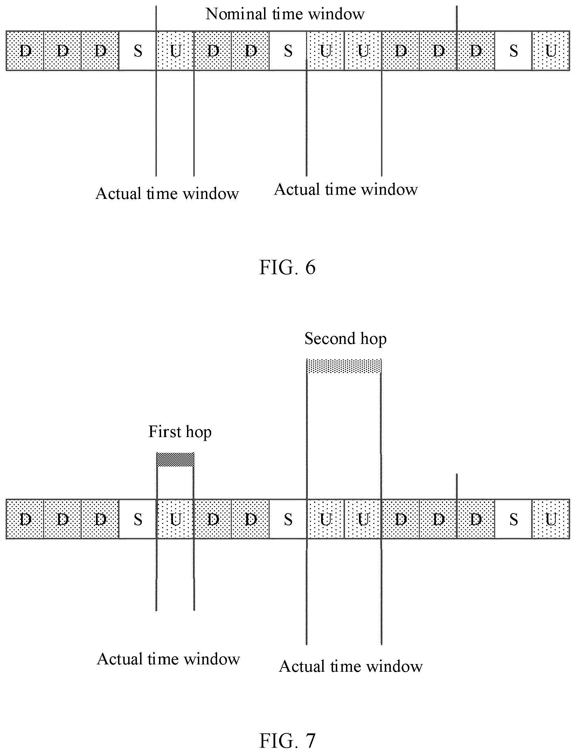

For a TDD system, given a semi-persistent frame structure of "DDDSUDDSUU", actual time windows determined based on the first rule are as shown in FIG. 6, and the corresponding frequency hopping pattern is as shown in FIG. 7, where 1st hop means the first hop, 2nd hop means the second hop, and the first hop and the second hop are located at different positions in frequency domain.

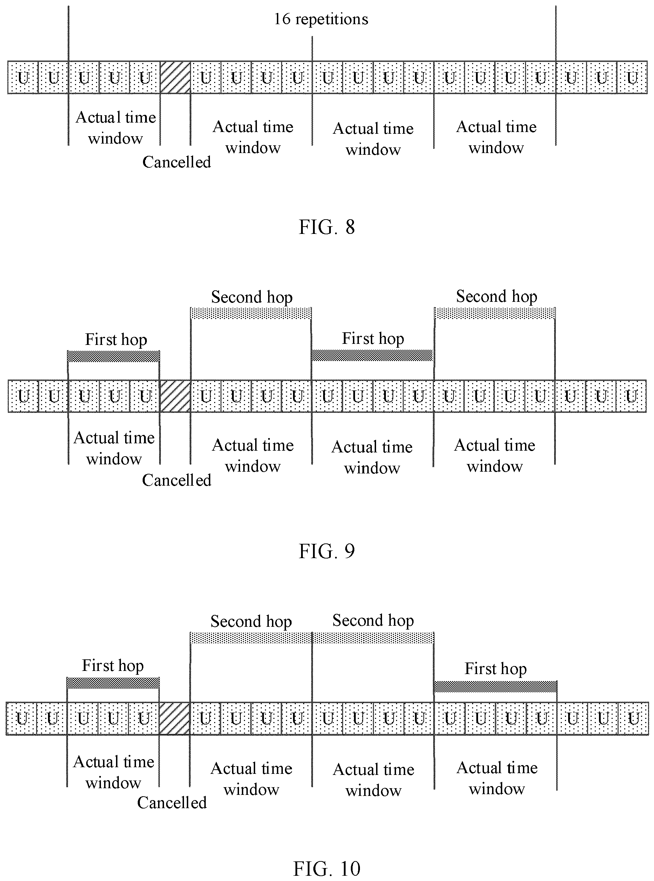

In another embodiment, it is assumed that a repetition number configured for an uplink repetition type A (PUSCH repetition type A) is 16. According to the first indication, the size of a nominal time window is determined to be 8 slots. However, the maximum duration corresponding to transmission(s) for which the UE is capable of keeping the first transmission characteristic satisfied is currently 4 slots. Therefore, for an FDD system, actual time windows determined based on the first rule are as shown in FIG. 8, and if, in this case, the frequency hopping interval configured is 4 slots, the corresponding frequency hopping pattern is as shown in FIG. 9.

Considering frequency hopping being enabled, since the same frequency hopping position can be used for actual windows that have a gap of less than X consecutive or non-consecutive symbols, the corresponding frequency hopping pattern is as shown in FIG. 10.

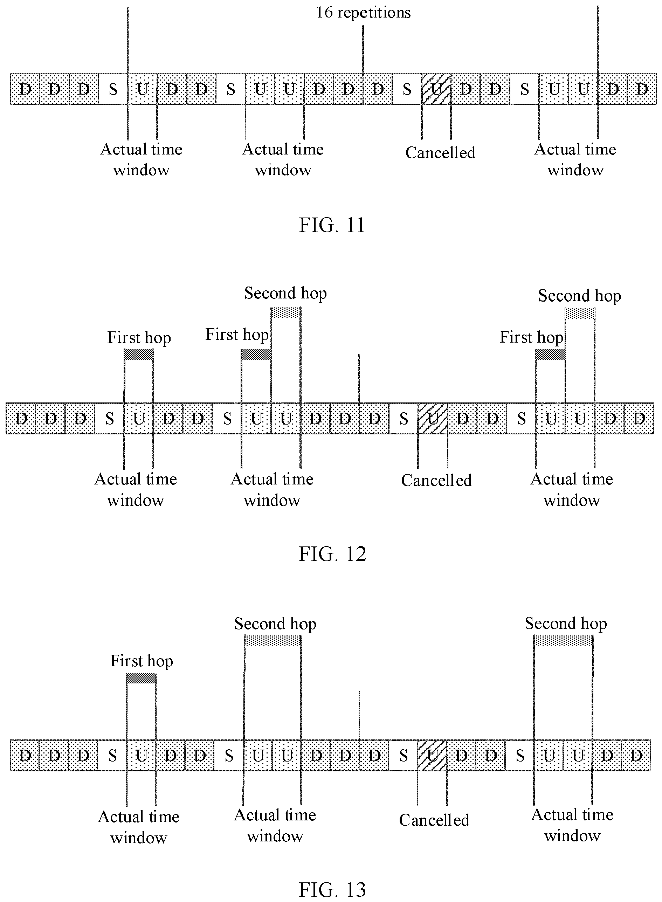

For a TDD system, under this repetition scheme, some slots may be unavailable due to SFI/CI. Actual time windows determined based on the first rule are as shown in FIG. 11 and if, in this case, the frequency hopping interval configured is 1 slot, the corresponding frequency hopping pattern is as shown in FIG. 12.

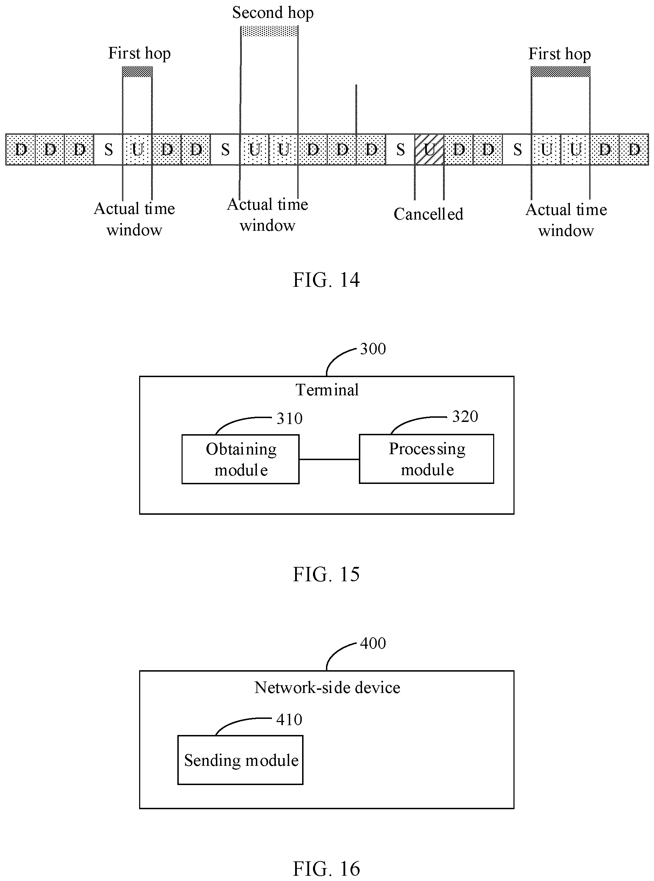

Further, considering frequency hopping being enabled, since the same frequency hopping position can be used for actual windows that have a gap of less than X consecutive or non-consecutive symbols, the corresponding frequency hopping pattern is as shown in FIG. 13, and if, in this case, the frequency hopping interval configured is 2 slots, the corresponding frequency hopping pattern is as shown in FIG. 14.

It should be noted that the method for determining an uplink transmission time window provided in the embodiments of this application may be executed by an apparatus for determining an uplink transmission time window, or a control module for loading and executing the method for determining an uplink transmission time window in the apparatus for determining an uplink transmission time window. In the embodiments of this application, the method for determining an uplink transmission time window provided in the embodiments of this application is described by using the method for determining an uplink transmission time window being executed by an apparatus for determining an uplink transmission time window as an example.

An embodiment of this application provides an apparatus for determining an uplink transmission time window, applied to a terminal 300. As shown in FIG. 15, the apparatus includes:
an obtaining module 310 configured to obtain a first indication; and
a processing module 320 configured to determine, based on the first indication and a first rule, a first time window in which one or more uplink transmissions satisfy a first transmission characteristic.

The first time window is an actual time window (actual window).

In this embodiment of this application, the terminal determines, based on the first indication and the first rule, the first time window in which the one or more uplink transmissions satisfy the first transmission characteristic, the first time window being an actual time window. In this way, a nominal time window can be further obtained through division based on actual transmission processes or an actual time window can be determined and obtained based on actual transmission processes, to significantly ensure that more consecutive available uplink transmission occasions are within an actual time window, so as to ensure that conditions of stable power and continuous phase can be met within the actual transmission time window. This enables the network to make joint channel estimation to improve reception performance and thus improve its coverage capability.

In some embodiments, the obtaining module 310 obtaining the first indication includes any one of the following:
obtaining the first indication that is predefined, where for example, the first indication indicates by default that a nominal time window is equal to the number of slots or symbols corresponding to the number of repetitions;
obtaining the first indication that is preconfigured;
obtaining the first indication that is configured through a media access control MAC control element CE;
obtaining the first indication that is configured through a radio resource control RRC message; and
obtaining the first indication that is configured through downlink control information DCI.

In some embodiments, the first indication includes at least one of the following:
size of a second time window, where the second time window is a nominal time window (nominal window), and the size of the nominal time window is a set of consecutive slots, a set of consecutive symbols, and/or a set of consecutive repetitions;
start time of the second time window;
end time of the second time window; and
repetition number N, where N is a positive integer.

In some embodiments, the first rule includes:
a time-domain length corresponding to the uplink transmission(s) is divided into one or more second time windows based on a size of the second time window, where the size of the second time window is defined by a set of slots, a set of symbols, and/or a set of repetitions; and
the second time window is divided into one or more first time windows in a case that the second time window satisfies at least one of the following first conditions, where in a case that the number of symbols or slots or repetitions occupied by a nominal time window is not equal to 0, the nominal time window consists of one or more actual time windows:
   a downlink transmission slot and/or symbol is present;
   symbols unavailable for uplink transmission are more than X, where X is a predefined or preconfigured threshold for limiting the maximum number of discontinuous-transmission symbols with the first transmission characteristic satisfied;
   an uplink transmission on an uplink transmission occasion (occasion) among the uplink transmission(s) is terminated or canceled by a transmission of higher priority;
   the number of consecutive slots or symbols available for uplink transmission exceeds a terminal capability, where the terminal capability means a maximum duration corresponding to transmission(s) for which the terminal is capable of keeping the first transmission characteristic satisfied;
   in a case of frequency hopping being enabled, the number of consecutive slots or symbols available for uplink transmission exceeds a frequency hopping interval (interval) in time domain, where the frequency hopping interval is the number of symbols occupied by or a time gap corresponding to one hop in time domain; and
   the second time window consists of consecutive slots, consecutive symbols, consecutive repetitions, or available uplink slots, where the available uplink slots are slots semi-persistently or dynamically configured for the uplink transmission(s).

In some embodiments, in a case that the nominal time window does not need to be further divided or determined, the nominal time window is the actual time window.

In some embodiments, the first rule further includes:
the following first manner is used to determine a start time of the first time window: a start time of the 1st first time window is a start time of a second time window, and a start time of each other first time window is the 1st orthogonal frequency division multiplexing OFDM symbol of a slot corresponding to the 1st actually available uplink transmission following an end time of a previous first time window, or the 1st OFDM symbol of the 1st actually available uplink transmission following the end time of the previous first time window; and
the following second manner is used to determine an end time of the first time window: an end time of the last first time window is an end time of the second time window, and an end time of each other first time window is a time that is a first time gap from a start time of the current first time window, where the first time gap is a minimum value of at least one of the following:
   size of the second time window;
   maximum duration corresponding to transmission(s) for which the terminal is capable of keeping the first transmission characteristic satisfied;
   frequency hopping interval in time domain determined based on a configuration in a case of frequency hopping being enabled;
   time gap between the start time of the current first time window and the 1st OFDM symbol of the 1st downlink transmission slot or symbol following the start time;
   time gap between the start time of the current first time window and the 1st OFDM symbol of a resource following the start time, where the resource is unavailable for uplink transmission and satisfies a second condition, the second condition being that the number of consecutive symbols unavailable for uplink transmission exceeds X, where X is a predefined or preconfigured threshold for limiting the maximum number of discontinuous-transmission symbols with the first transmission characteristic satisfied; and
   time gap between the start time of the current first time window and the 1st OFDM symbol of the 1st uplink transmission following the start time that is terminated or canceled; where
   the first time window consists of a set of actually available slots, symbols, or repetitions for the uplink transmission, where the set of actually available slots, symbols, or repetitions is semi-persistently or dynamically configured.

In some embodiments, for the actual uplink-transmission time window determined based on the first indication and the first rule, the UE is not required to meet the off-power requirement (off-power requirements) in the actual time window.

In some embodiments, in the case of frequency hopping being enabled, each second time window corresponds to a new hop, with a frequency hopping position determined by a first sequence number, where the first sequence number is at least one of the following:
sequence number of the second time window;
sequence number of the 1st or last slot of the second time window;
sequence number of the 1st slot for actual uplink transmission in the second time window; and
sequence number of the 1st repetition for actual uplink transmission in the second time window.

In some embodiments, in the case of frequency hopping being enabled, each first time window corresponds to a new hop, with a frequency hopping position determined by a second sequence number, where the second sequence number is at least one of the following:
sequence number of the first time window;
sequence number of a second time window in which the first time window is located;
sequence number of the 1st or last slot of the first time window; and
sequence number of the 1st or last repetition of the first time window, where the repetition includes nominal repetition nominal repetition and actual repetition actual repetition.

In some embodiments, in a case that two consecutive first time windows are continuous or have a gap of no more than X symbols in time domain, the two consecutive first time windows are able to maintain or use a same frequency hopping position.

In some embodiments, the same frequency hopping position is determined by the 1st time window or the last time window.

In some embodiments, the DCI is DCI for dynamically scheduling a physical uplink shared channel PUSCH or DCI for activating a configured grant type 2 PUSCH.

In some embodiments, the first indication is located in a new first indication field of the DCI or located in at least one of the following indication fields of the DCI:
transmit power control command (TPC command);
time domain resource assignment TDRA (Time domain resource assignment);
precoding information and number of layers (Precoding information and number of layers); and
antenna ports (Antenna ports).

In some embodiments, the start time of the second time window is at least one of the following:
the 1st OFDM symbol of a slot corresponding to a current scheduled transmission;
the 1st OFDM symbol of a TDRA corresponding to a current scheduled transmission;
the 1st OFDM symbol of a slot corresponding to the 1st actual transmission of a current scheduled transmission;
the 1st OFDM symbol of the 1st actual transmission of a current scheduled transmission; and
an absolute time with respect to a current scheduled transmission, which is determined by, for example, a slot offset contained in DCI for transmission scheduling.

In some embodiments, the end time of the second time window is at least one of the following:
an end time of the last OFDM symbol of a current scheduled transmission;
an end time that is M second time windows from the start time of the second time window, where M is a positive integer;
an end time that is K first time windows from the start time of the second time window, where K is a positive integer; and
an end time that is a preset time length from the start time of the second time window.

In some embodiments, the first transmission characteristic requires that the one or more uplink transmissions satisfy at least one of the following:
having a same modulation scheme;
having a same frequency position;
having a same bandwidth;
having same transmit power;
having a transmit power difference less than a preset threshold;
having a same beam (spatial Tx filter);
having a same transmit precoding matrix indicator TPMI;
having a same waveform (DFT-s-OFDM or CP-OFDM);
having a same transport block TB for PUSCH;
having same uplink control information UCI for physical uplink control channel PUCCH; and
having a same PUCCH format for physical uplink control channel PUCCH.

In the foregoing embodiment, "same" includes being exactly the same and being slightly different from each other.

In some embodiments, the uplink transmission further includes at least one of the following:
PUSCH repetition type (repetition type) A, PUSCH repetition type B, PUSCH transport block processing over multi-slot TBoMS, PUCCH, and sounding reference signal SRS.

In the foregoing embodiment, the multiple uplink transmissions may include multiple different uplink physical channels or signals, or may include multiple transmissions of one single uplink physical channel, such as multiple repetitions in a case of transmission of repetitions or multiple slots in a case of TBoMS transmission.

The apparatus for determining an uplink transmission time window in this embodiment of this application may be an apparatus or an apparatus or electronic device having an operating system, or may be a component, an integrated circuit, or a chip in a terminal. The apparatus or electronic device may be a mobile terminal or a non-mobile terminal. For example, the mobile terminal may include but is not limited to the types of the terminal 11 listed above, and the non-mobile terminal may be a server, a network attached storage (Network Attached Storage, NAS), a personal computer (Personal Computer, PC), a television (Television, TV), a teller machine, a self-service machine, or the like, which are not specifically limited in the embodiments of this application.

The apparatus for determining an uplink transmission time window provided in this embodiment of this application can implement the processes implemented in the method embodiment in FIG. 2, with the same technical effects achieved.

An embodiment of this application further provides an apparatus for determining an uplink transmission time window, applied to a network-side device 400. As shown in FIG. 16, the apparatus includes:
a sending module 410 configured to send a first indication to a terminal, where the first indication is used to determine a first time window in which one or more uplink transmissions satisfy a first transmission characteristic.

In some embodiments, the sending a first indication includes any one of the following:
sending the first indication to the terminal through a media access control MAC control element CE;
sending the first indication to the terminal through a radio resource control RRC message; and
sending the first indication to the terminal through downlink control information DCI.

In some embodiments, the first indication includes at least one of the following:
size of a second time window;
start time of the second time window;
end time of the second time window; and
repetition number N, where N is a positive integer.

In some embodiments, the DCI is DCI for dynamically scheduling a physical uplink shared channel PUSCH or DCI for activating a configured grant type 2 PUSCH.

In some embodiments, the first indication is located in a new first indication field of the DCI or located in at least one of the following indication fields of the DCI:
transmit power control command (TPC command);
time domain resource assignment TDRA (Time domain resource assignment);
precoding information and number of layers (Precoding information and number of layers); and
antenna ports (Antenna ports).

In some embodiments, the first transmission characteristic requires that the one or more uplink transmissions satisfy at least one of the following:
having a same modulation scheme;
having a same frequency position;
having a same bandwidth;
having same transmit power;
having a transmit power difference less than a preset threshold;
having a same beam (spatial Tx filter);
having a same transmit precoding matrix indicator TPMI;
having a same waveform (DFT-s-OFDM or CP-OFDM);
having a same transport block TB for PUSCH;
having same uplink control information UCI for physical uplink control channel PUCCH; and
having a same PUCCH format for physical uplink control channel PUCCH.

In the foregoing embodiment, "same" includes being exactly the same and being slightly different from each other.

In some embodiments, the uplink transmission further includes at least one of the following:
PUSCH repetition type (repetition type) A, PUSCH repetition type B, PUSCH transport block processing over multi-slot TBoMS, PUCCH, and sounding reference signal SRS.

In the foregoing embodiment, the multiple uplink transmissions may include multiple different uplink physical channels or signals, or may include multiple transmissions of one single uplink physical channel, such as multiple repetitions in a case of transmission of repetitions or multiple slots in a case of TBoMS transmission.

The apparatus for determining an uplink transmission time window provided in this embodiment of this application can implement the processes implemented in the method embodiment in FIG. 3, with the same technical effects achieved.

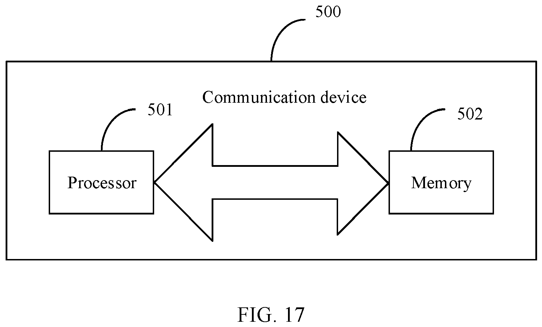

Optionally, as shown in FIG. 17, an embodiment of this application further provides a communication device 500 including a processor 501, a memory 502, a program or instructions stored in the memory 502 and capable of running on the processor 501. For example, when the communication device 500 is a terminal, the program or the instructions are executed by the processor 501 to implement the processes of the foregoing embodiment of the method for determining an uplink transmission time window applied to a terminal, with the same technical effects achieved. When the communication device 500 is a network-side device, the program or the instructions are executed by the processor 501 to implement the processes of the foregoing embodiment of the method for determining an uplink transmission time window applied to a network-side device, with the same technical effects achieved. To avoid repetition, details are not described herein again.

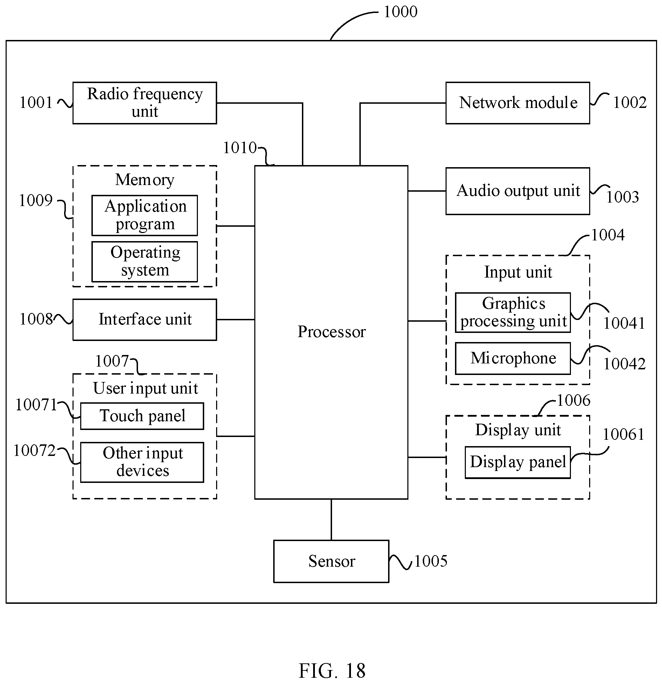

An embodiment of this application further provides a terminal including a processor and a communication interface. The processor is configured to obtain a first indication, and determine, based on the first indication and a first rule, a first time window in which one or more uplink transmissions satisfy a first transmission characteristic. This terminal embodiment corresponds to the foregoing method embodiment on the terminal side. All processes and implementations in the foregoing method embodiment can be applicable to this terminal embodiment, with the same technical effect achieved. Specifically, FIG. 18 is a schematic diagram of a hardware structure of a terminal for implementing embodiments of this application.

The terminal 1000 includes but is not limited to at least some of components such as a radio frequency unit 1001, a network module 1002, an audio output unit 1003, an input unit 1004, a sensor 1005, a display unit 1006, a user input unit 1007, an interface unit 1008, a memory 1009, and a processor 1010.

Persons skilled in the art can understand that the terminal 1000 may further include a power source (for example, a battery) for supplying power to the components. The power source may be logically connected to the processor 1010 through a power management system. In this way, functions such as charge management, discharge management, and power consumption management are implemented by using the power management system. The structure of the terminal shown in FIG. 18 does not constitute a limitation on the terminal. The terminal may include more or fewer components than illustrated in the figure, or combine some components, or have a different component arrangement. Details are not described herein.

It should be understood that in this embodiment of this application, the input unit 1004 may include a graphics processing unit (Graphics Processing Unit, GPU) 10041 and a microphone 10042. The graphics processing unit 10041 processes image data of a static picture or a video that is obtained by an image capture apparatus (for example, a camera) in an image capture mode or a video capture mode. The display unit 1006 may include a display panel 10061. The display panel 10061 may be configured in a form of a liquid crystal display, an organic light-emitting diode display, or the like. The user input unit 1007 includes a touch panel 10071 and other input devices 10072. The touch panel 10071 is also referred to as a touchscreen. The touch panel 10071 may include two parts: a touch detection apparatus and a touch controller. The other input devices 10072 may include but are not limited to a physical keyboard, a function button (for example, a volume control button or a power on/off button), a trackball, a mouse, and a joystick. Details are not described herein.

In this embodiment of this application, the radio frequency unit 1001 transmits downlink data received from a network-side device to the processor 1010 for processing, and in addition, transmits uplink data to the network-side device. Generally, the radio frequency unit 1001 includes but is not limited to an antenna, at least one amplifier, a transceiver, a coupler, a low-noise amplifier, and a duplexer.

The memory 1009 may be configured to store software programs or instructions and various data. The memory 1009 may include a program or instruction storage area and a data storage area. The program or instruction storage area may store an operating system, an application program or instructions required by at least one function (for example, sound play function or image play function), and the like. In addition, the memory 1009 may include a high-speed random access memory, and may further include a non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory, for example, at least one disk storage device, flash memory device, or other non-volatile solid-state storage device.

The processor 1010 may include one or more processing units. Optionally, the processor 1010 may integrate an application processor and a modem processor. The application processor mainly processes an operating system, a user interface, application programs or instructions, and the like. The modem processor mainly processes wireless communication, for example, being a baseband processor. It can be understood that the modem processor may alternatively be not integrated in the processor 1010.

The processor 1010 is configured to obtain a first indication, and determine, based on the first indication and a first rule, a first time window in which one or more uplink transmissions satisfy a first transmission characteristic.

The first time window is an actual time window (actual window).

In this embodiment of this application, the terminal determines, based on the first indication and the first rule, the first time window in which the one or more uplink transmissions satisfy the first transmission characteristic, the first time window being an actual time window. In this way, a nominal time window can be further obtained through division based on actual transmission processes or an actual time window can be determined and obtained based on actual transmission processes, to significantly ensure that more consecutive available uplink transmission occasions are within an actual time window, so as to ensure that conditions of stable power and continuous phase can be met within the actual transmission time window. This enables the network to make joint channel estimation to improve reception performance and thus improve its coverage capability.

In some embodiments, the processor 1010 obtaining the first indication includes any one of the following:
obtaining the first indication that is predefined, where for example, the first indication indicates by default that a nominal time window is equal to the number of slots or symbols corresponding to the number of repetitions;
obtaining the first indication that is preconfigured;
obtaining the first indication that is configured through a media access control MAC control element CE;
obtaining the first indication that is configured through a radio resource control RRC message; and
obtaining the first indication that is configured through downlink control information DCI.

In some embodiments, the first indication includes at least one of the following:
size of a second time window, where the second time window is a nominal time window (nominal window), and the size of the nominal time window is a set of consecutive slots, a set of consecutive symbols, and/or a set of consecutive repetitions;
start time of the second time window;
end time of the second time window; and
repetition number N, where N is a positive integer.

In some embodiments, the first rule includes:
a time-domain length corresponding to the uplink transmission(s) is divided into one or more second time windows based on a size of the second time window, where the size of the second time window is defined by a set of slots, a set of symbols, and/or a set of repetitions; and
the second time window is divided into one or more first time windows in a case that the second time window satisfies at least one of the following first conditions, where in a case that the number of symbols or slots or repetitions occupied by a nominal time window is not equal to 0, the nominal time window consists of one or more actual time windows:
   a downlink transmission slot and/or symbol is present;
   symbols unavailable for uplink transmission are more than X, where X is a predefined or preconfigured threshold for limiting the maximum number of discontinuous-transmission symbols with the first transmission characteristic satisfied;
   an uplink transmission on an uplink transmission occasion (occasion) among the uplink transmission(s) is terminated or canceled by a transmission of higher priority;
   the number of consecutive slots or symbols available for uplink transmission exceeds a terminal capability, where the terminal capability means a maximum duration corresponding to transmission(s) for which the terminal is capable of keeping the first transmission characteristic satisfied;
   in a case of frequency hopping being enabled, the number of consecutive slots or symbols available for uplink transmission exceeds a frequency hopping interval (interval) in time domain, where the frequency hopping interval is the number of symbols occupied by or a time gap corresponding to one hop in time domain; and
   the second time window consists of consecutive slots, consecutive symbols, consecutive repetitions, or available uplink slots, where the available uplink slots are slots semi-persistently or dynamically configured for the uplink transmission(s).

In some embodiments, in a case that the nominal time window does not need to be further divided or determined, the nominal time window is the actual time window.

In some embodiments, the first rule further includes:
the following first manner is used to determine a start time of the first time window: a start time of the 1st first time window is a start time of a second time window, and a start time of each other first time window is the 1st orthogonal frequency division multiplexing OFDM symbol of a slot corresponding to the 1st actually available uplink transmission following an end time of a previous first time window, or the 1st OFDM symbol of the 1st actually available uplink transmission following the end time of the previous first time window; and
the following second manner is used to determine an end time of the first time window: an end time of the last first time window is an end time of the second time window, and an end time of each other first time window is a time that is a first time gap from a start time of the current first time window, where the first time gap is a minimum value of at least one of the following:
   size of the second time window;
   maximum duration corresponding to transmission(s) for which the terminal is capable of keeping the first transmission characteristic satisfied;
   frequency hopping interval in time domain determined based on a configuration in a case of frequency hopping being enabled;
   time gap between the start time of the current first time window and the 1st OFDM symbol of the 1st downlink transmission slot or symbol following the start time;
   time gap between the start time of the current first time window and the 1st OFDM symbol of a resource following the start time, where the resource is unavailable for uplink transmission and satisfies a second condition, the second condition being that the number of consecutive symbols unavailable for uplink transmission exceeds X, where X is a predefined or preconfigured threshold for limiting the maximum number of discontinuous-transmission symbols with the first transmission characteristic satisfied; and
   time gap between the start time of the current first time window and the 1st OFDM symbol of the 1st uplink transmission following the start time that is terminated or canceled; where
   the first time window consists of a set of actually available slots, symbols, or repetitions for the uplink transmission, where the set of actually available slots, symbols, or repetitions is semi-persistently or dynamically configured.

In some embodiments, for the actual uplink-transmission time window determined based on the first indication and the first rule, the UE is not required to meet the off-power requirement (off-power requirements) in the actual time window.

In some embodiments, in the case of frequency hopping being enabled, each second time window corresponds to a new hop, with a frequency hopping position determined by a first sequence number, where the first sequence number is at least one of the following:
sequence number of the second time window;
sequence number of the 1st or last slot of the second time window;
sequence number of the 1st slot for actual uplink transmission in the second time window; and
sequence number of the 1st repetition for actual uplink transmission in the second time window.

In some embodiments, in the case of frequency hopping being enabled, each first time window corresponds to a new hop, with a frequency hopping position determined by a second sequence number, where the second sequence number is at least one of the following:
sequence number of the first time window;
sequence number of a second time window in which the first time window is located;
sequence number of the 1st or last slot of the first time window; and
sequence number of the 1st or last repetition of the first time window, where the repetition includes nominal repetition nominal repetition and actual repetition actual repetition.

In some embodiments, in a case that two consecutive first time windows are continuous or have a gap of no more than X symbols in time domain, the two consecutive first time windows are able to maintain or use a same frequency hopping position.

In some embodiments, the same frequency hopping position is determined by the 1st time window or the last time window.

In some embodiments, the DCI is DCI for dynamically scheduling a physical uplink shared channel PUSCH or DCI for activating a configured grant type 2 PUSCH.

In some embodiments, the first indication is located in a new first indication field of the DCI or located in at least one of the following indication fields of the DCI:
transmit power control command (TPC command);
time domain resource assignment TDRA (Time domain resource assignment);
precoding information and number of layers (Precoding information and number of layers); and
antenna ports (Antenna ports).

In some embodiments, the start time of the second time window is at least one of the following:
the 1st OFDM symbol of a slot corresponding to a current scheduled transmission;
the 1st OFDM symbol of a TDRA corresponding to a current scheduled transmission;
the 1st OFDM symbol of a slot corresponding to the 1st actual transmission of a current scheduled transmission;
the 1st OFDM symbol of the 1st actual transmission of a current scheduled transmission; and
an absolute time with respect to a current scheduled transmission, which is determined by, for example, a slot offset contained in DCI for transmission scheduling.

In some embodiments, the end time of the second time window is at least one of the following:
an end time of the last OFDM symbol of a current scheduled transmission;
an end time that is M second time windows from the start time of the second time window, where M is a positive integer;
an end time that is K first time windows from the start time of the second time window, where K is a positive integer; and
an end time that is a preset time length from the start time of the second time window.

In some embodiments, the first transmission characteristic requires that the one or more uplink transmissions satisfy at least one of the following:
having a same modulation scheme;
having a same frequency position;
having a same bandwidth;
having same transmit power;
having a transmit power difference less than a preset threshold;
having a same beam (spatial Tx filter);
having a same transmit precoding matrix indicator TPMI;
having a same waveform (DFT-s-OFDM or CP-OFDM);
having a same transport block TB for PUSCH;
having same uplink control information UCI for physical uplink control channel PUCCH; and
having a same PUCCH format for physical uplink control channel PUCCH.

In the foregoing embodiment, "same" includes being exactly the same and being slightly different from each other.

In some embodiments, the uplink transmission further includes at least one of the following:
PUSCH repetition type (repetition type) A, PUSCH repetition type B, PUSCH transport block processing over multi-slot TBoMS, PUCCH, and sounding reference signal SRS.

In the foregoing embodiment, the multiple uplink transmissions may include multiple different uplink physical channels or signals, or may include multiple transmissions of one single uplink physical channel, such as multiple repetitions in a case of transmission of repetitions or multiple slots in a case of TBoMS transmission.

An embodiment of this application further provides a network-side device including a processor and a communication interface. The communication interface is configured to send a first indication to a terminal, where the first indication is used to determine a first time window in which one or more uplink transmissions satisfy a first transmission characteristic. This network-side device embodiment corresponds to the foregoing network-side device method embodiment. All processes and implementations in the foregoing method embodiment can be applicable to this network-side device embodiment, with the same technical effect achieved.

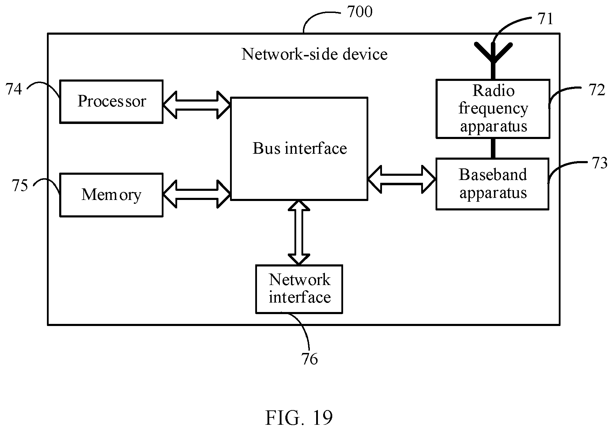

Specifically, an embodiment of this application further provides a network-side device. As shown in FIG. 19, the network device 700 includes an antenna 71, a radio frequency apparatus 72, and a baseband apparatus 73. The antenna 71 is connected to the radio frequency apparatus 72. In an uplink direction, the radio frequency apparatus 72 receives information by using the antenna 71, and transmits the received information to the baseband apparatus 73 for processing. In a downlink direction, the baseband apparatus 73 processes to-be-sent information and sends the information to the radio frequency apparatus 72; and the radio frequency apparatus 72 processes the received information and then sends the information out by using the antenna 71.

The frequency band processing apparatus may be located in the baseband apparatus 73. The method executed by the network-side device in the foregoing embodiments may be implemented in the baseband apparatus 73, and the baseband apparatus 73 includes a processor 74 and a memory 75.

The baseband apparatus 73 may include, for example, at least one baseband processing unit, where a plurality of chips are disposed on the baseband processing unit. As shown in FIG. 19, one of the chips is, for example, the processor 74, and connected to the memory 75, to invoke the program in the memory 75 to perform the operations of the network device shown in the foregoing method embodiment.

The baseband apparatus 73 may further include a network interface 76, configured to exchange information with the radio frequency apparatus 72, where the interface is, for example, a common public radio interface (common public radio interface, CPRI for short).

Specifically, the network-side device in this embodiment of the present invention further includes instructions or a program stored in the memory 75 and capable of running on the processor 74. The processor 74 invokes the instructions or program in the memory 75 to perform the method performed by the modules shown in FIG. 16, with the same technical effects achieved. To avoid repetition, details are not described herein again.

An embodiment of this application further provides a readable storage medium. The readable storage medium stores a program or instructions, and when the program or instructions are executed by a processor, the processes of the foregoing embodiment of the method for determining an uplink transmission time window are implemented, with the same technical effects achieved. To avoid repetition, details are not described herein again.

The processor is a processor in the terminal described in the foregoing embodiment. The readable storage medium includes a computer-readable storage medium, for example, a computer read-only memory (Read-Only Memory, ROM), a random access memory (Random Access Memory, RAM), a magnetic disk, or an optical disc.

An embodiment of this application further provides a chip. The chip includes a processor and a communication interface, the communication interface is coupled to the processor, and the processor is configured to run a program or instructions to implement the processes of the foregoing embodiments of the method for determining an uplink transmission time window, with the same technical effects achieved. To avoid repetition, details are not repeated herein.

It should be understood that the chip mentioned in the embodiments of this application may also be referred to as a system-level chip, a system chip, a chip system, a system-on-chip, or the like.

An embodiment of this application further provides a computer program product. The computer program product is stored in a non-volatile storage medium, and when the computer program product is executed by at least one processor, the processes of the foregoing embodiment of the method for determining an uplink transmission time window are implemented, with the same technical effects achieved. To avoid repetition, details are not described herein again.

It should be noted that in this specification, the terms "include" and "comprise", or any of their variants are intended to cover a non-exclusive inclusion, such that a process, method, article, or apparatus that includes a list of elements not only includes those elements but also includes other elements that are not expressly listed, or further includes elements inherent to such process, method, article, or apparatus. In absence of more constraints, an element preceded by "includes a..." does not preclude the existence of other identical elements in the process, method, article, or apparatus that includes the element. Furthermore, it should be noted that the scope of the methods and apparatuses in the embodiments of this application is not limited to performing the functions in the order shown or discussed, but may also include performing the functions in a substantially simultaneous manner or in a reverse order depending on the functions involved. For example, the described methods may be performed in an order different from that described, and various steps may be added, omitted, or combined. In addition, features described with reference to some examples may be combined in other examples.

Based on the foregoing description of the embodiments, persons skilled in the art can clearly understand that the method in the foregoing embodiments may be implemented by software with a necessary general hardware platform. Certainly, the method in the foregoing embodiments may alternatively be implemented by hardware. However, in many cases, the former is a preferred embodiment. Based on such an understanding, the technical solutions of this application essentially, or the part contributing to the prior art may be implemented in a form of a computer software product. The computer software product is stored in a storage medium (for example, a ROM/RAM, a magnetic disk, or an optical disc), and includes several instructions for instructing a terminal (which may be a mobile phone, a computer, a server, an air conditioner, a network device, or the like) to perform the method described in the embodiments of this application.

The foregoing describes the embodiments of this application with reference to the accompanying drawings. However, this application is not limited to the foregoing specific embodiments. The foregoing specific embodiments are merely illustrative rather than restrictive. As instructed by this application, persons of ordinary skill in the art may develop many other forms without departing from the principle of this application and the protection scope of the claims, and all such forms fall within the protection scope of this application.

## Claims

1. A method for determining an uplink transmission time window, performed by a terminal and comprising:
obtaining a first indication; and
determining, based on the first indication and a first rule, a first time window in which one or more uplink transmissions satisfy a first transmission characteristic.

2. The method for determining an uplink transmission time window according to claim 1, wherein the obtaining a first indication comprises any one of the following:
obtaining the first indication that is predefined;
obtaining the first indication that is preconfigured;
obtaining the first indication that is configured through a media access control MAC control element CE;
obtaining the first indication that is configured through a radio resource control RRC message; and
obtaining the first indication that is configured through downlink control information DCI.

3. The method for determining an uplink transmission time window according to claim 1, wherein the first indication comprises at least one of the following:
size of a second time window;
start time of the second time window;
end time of the second time window; and
repetition number N, wherein N is a positive integer.

4. The method for determining an uplink transmission time window according to claim 1, wherein the first rule comprises:
a time-domain length corresponding to the uplink transmission(s) is divided into one or more second time windows based on a size of the second time window; and
the second time window is divided into one or more first time windows in a case that the second time window satisfies at least one of the following first conditions:
a downlink transmission slot and/or symbol is present;
symbols unavailable for uplink transmission are more than X, wherein X is a predefined or preconfigured threshold for limiting the maximum number of discontinuous-transmission symbols with the first transmission characteristic satisfied;
an uplink transmission on an uplink transmission occasion among the uplink transmission(s) is terminated or canceled by a transmission of higher priority;
the number of consecutive slots or symbols available for uplink transmission exceeds a terminal capability, wherein the terminal capability means a maximum duration corresponding to transmission(s) for which the terminal is capable of keeping the first transmission characteristic satisfied;
in a case of frequency hopping being enabled, the number of consecutive slots or symbols available for uplink transmission exceeds a frequency hopping interval (interval) in time domain, wherein the frequency hopping interval is the number of symbols occupied by or a time gap corresponding to one hop in time domain; and
the second time window consists of consecutive slots, consecutive symbols, consecutive repetitions, or available uplink slots, wherein the available uplink slots are slots semi-persistently or dynamically configured for the uplink transmission(s).

5. The method for determining an uplink transmission time window according to claim 1 or 3, wherein the first rule further comprises:
the following first manner is used to determine a start time of the first time window: a start time of the 1st first time window is a start time of a second time window, and a start time of each other first time window is the 1st orthogonal frequency division multiplexing OFDM symbol of a slot corresponding to the 1st actually available uplink transmission following an end time of a previous first time window, or the 1st OFDM symbol of the 1st actually available uplink transmission following the end time of the previous first time window; and
the following second manner is used to determine an end time of the first time window: an end time of the last first time window is an end time of the second time window, and an end time of each other first time window is a time that is a first time gap from a start time of the current first time window, wherein the first time gap is a minimum value of at least one of the following:
size of the second time window;
maximum duration corresponding to transmission(s) for which the terminal is capable of keeping the first transmission characteristic satisfied;
frequency hopping interval in time domain determined based on a configuration in a case of frequency hopping being enabled;
time gap between the start time of the current first time window and the 1st OFDM symbol of the 1st downlink transmission slot or symbol following the start time;
time gap between the start time of the current first time window and the 1st OFDM symbol of a resource following the start time, wherein the resource is unavailable for uplink transmission and satisfies a second condition, the second condition being that the number of consecutive symbols unavailable for uplink transmission exceeds X, wherein X is a predefined or preconfigured threshold for limiting the maximum number of discontinuous-transmission symbols with the first transmission characteristic satisfied; and
time gap between the start time of the current first time window and the 1st OFDM symbol of the 1st uplink transmission following the start time that is terminated or canceled; wherein
the first time window consists of a set of actually available slots, symbols, or repetitions for the uplink transmission, wherein the set of actually available slots, symbols, or repetitions is semi-persistently or dynamically configured.

6. The method for determining an uplink transmission time window according to claim 1, 3, 4, or 5, wherein in the case of frequency hopping being enabled, each second time window corresponds to a new hop, with a frequency hopping position determined by a first sequence number, wherein the first sequence number is at least one of the following:
sequence number of the second time window;
sequence number of the 1st or last slot of the second time window;
sequence number of the 1st slot for actual uplink transmission in the second time window; and
sequence number of the 1st repetition for actual uplink transmission in the second time window.

7. The method for determining an uplink transmission time window according to claim 1, 4, or 5, wherein in the case of frequency hopping being enabled, each first time window corresponds to a new hop, with a frequency hopping position determined by a second sequence number, wherein the second sequence number is at least one of the following:
sequence number of the first time window;
sequence number of a second time window in which the first time window is located;
sequence number of the 1st or last slot of the first time window; and
sequence number of the 1st or last repetition of the first time window.

8. The method for determining an uplink transmission time window according to claim 7, wherein in a case that two consecutive first time windows are continuous or have a gap of no more than X symbols in time domain, the two consecutive first time windows are able to maintain or use a same frequency hopping position.

9. The method for determining an uplink transmission time window according to claim 8, wherein the same frequency hopping position is determined by the 1st time window or the last time window.

10. The method for determining an uplink transmission time window according to claim 2, wherein the DCI is DCI for dynamically scheduling a physical uplink shared channel PUSCH or DCI for activating a configured grant type 2 PUSCH.

11. The method for determining an uplink transmission time window according to claim 2, wherein the first indication is located in a new first indication field of the DCI or located in at least one of the following indication fields of the DCI:
transmit power control command;
time domain resource assignment TDRA;
precoding information and number of layers; and
antenna ports.

12. The method for determining an uplink transmission time window according to claim 3, wherein the start time of the second time window is at least one of the following:
the 1st OFDM symbol of a slot corresponding to a current scheduled transmission;
the 1st OFDM symbol of a TDRA corresponding to a current scheduled transmission;
the 1st OFDM symbol of a slot corresponding to the 1st actual transmission of a current scheduled transmission;
the 1st OFDM symbol of the 1st actual transmission of a current scheduled transmission; and
an absolute time with respect to a current scheduled transmission.

13. The method for determining an uplink transmission time window according to claim 3, wherein the end time of the second time window is at least one of the following:
an end time of the last OFDM symbol of a current scheduled transmission;
an end time that is M second time windows from the start time of the second time window, wherein M is a positive integer;
an end time that is K first time windows from the start time of the second time window, wherein K is a positive integer; and
an end time that is a preset time length from the start time of the second time window.

14. The method for determining an uplink transmission time window according to claim 1, wherein the first transmission characteristic requires that the one or more uplink transmissions satisfy at least one of the following:
having a same modulation scheme;
having a same frequency position;
having a same bandwidth;
having same transmit power;
having a transmit power difference less than a preset threshold;
having a same beam;
having a same transmit precoding matrix indicator TPMI;
having a same waveform;
having a same transport block TB for PUSCH;
having same uplink control information UCI for physical uplink control channel PUCCH; and
having a same PUCCH format for physical uplink control channel PUCCH.

15. The method for determining an uplink transmission time window according to claim 1, wherein the uplink transmission comprises at least one of the following:
PUSCH repetition type (repetition type) A, PUSCH repetition type B, PUSCH transport block processing over multi-slot TBoMS, PUCCH, and sounding reference signal SRS.

16. A method for determining an uplink transmission time window, performed by a network-side device and comprising:
sending a first indication to a terminal, wherein the first indication is used to determine a first time window in which one or more uplink transmissions satisfy a first transmission characteristic.

17. The method for determining an uplink transmission time window according to claim 16, wherein the sending a first indication comprises any one of the following:
sending the first indication to the terminal through a media access control MAC control element CE;
sending the first indication to the terminal through a radio resource control RRC message; and
sending the first indication to the terminal through downlink control information DCI.

18. The method for determining an uplink transmission time window according to claim 16, wherein the first indication comprises at least one of the following:
size of a second time window;
start time of the second time window;
end time of the second time window; and
repetition number N, wherein N is a positive integer.

19. An apparatus for determining an uplink transmission time window, applied to a terminal and comprising:
an obtaining module configured to obtain a first indication; and
a processing module configured to determine, based on the first indication and a first rule, a first time window in which one or more uplink transmissions satisfy a first transmission characteristic.

20. The apparatus for determining an uplink transmission time window according to claim 19, wherein the first indication comprises at least one of the following:
size of a second time window;
start time of the second time window;
end time of the second time window; and
repetition number N, wherein N is a positive integer.

21. The apparatus for determining an uplink transmission time window according to claim 19, wherein the first rule comprises:
a time-domain length corresponding to the uplink transmission(s) is divided into one or more second time windows based on a size of the second time window; and
the second time window is divided into one or more first time windows in a case that the second time window satisfies at least one of the following first conditions:
a downlink transmission slot and/or symbol is present;
symbols unavailable for uplink transmission are more than X, wherein X is a predefined or preconfigured threshold for limiting the maximum number of discontinuous-transmission symbols with the first transmission characteristic satisfied;
an uplink transmission on an uplink transmission occasion among the uplink transmission(s) is terminated or canceled by a transmission of higher priority;
the number of consecutive slots or symbols available for uplink transmission exceeds a terminal capability, wherein the terminal capability means a maximum duration corresponding to transmission(s) for which the terminal is capable of keeping the first transmission characteristic satisfied;
in a case of frequency hopping being enabled, the number of consecutive slots or symbols available for uplink transmission exceeds a frequency hopping interval (interval) in time domain, wherein the frequency hopping interval is the number of symbols occupied by or a time gap corresponding to one hop in time domain; and
the second time window consists of consecutive slots, consecutive symbols, consecutive repetitions, or available uplink slots, wherein the available uplink slots are slots semi-persistently or dynamically configured for the uplink transmission(s).

22. The apparatus for determining an uplink transmission time window according to claim 19 or 20, wherein the first rule further comprises:
the following first manner is used to determine a start time of the first time window: a start time of the 1st first time window is a start time of a second time window, and a start time of each other first time window is the 1st orthogonal frequency division multiplexing OFDM symbol of a slot corresponding to the 1st actually available uplink transmission following an end time of a previous first time window, or the 1st OFDM symbol of the 1st actually available uplink transmission following the end time of the previous first time window; and
the following second manner is used to determine an end time of the first time window: an end time of the last first time window is an end time of the second time window, and an end time of each other first time window is a time that is a first time gap from a start time of the current first time window, wherein the first time gap is a minimum value of at least one of the following:
size of the second time window;
maximum duration corresponding to transmission(s) for which the terminal is capable of keeping the first transmission characteristic satisfied;
frequency hopping interval in time domain determined based on a configuration in a case of frequency hopping being enabled;
time gap between the start time of the current first time window and the 1st OFDM symbol of the 1st downlink transmission slot or symbol following the start time;
time gap between the start time of the current first time window and the 1st OFDM symbol of a resource following the start time, wherein the resource is unavailable for uplink transmission and satisfies a second condition, the second condition being that the number of consecutive symbols unavailable for uplink transmission exceeds X, wherein X is a predefined or preconfigured threshold for limiting the maximum number of discontinuous-transmission symbols with the first transmission characteristic satisfied; and
time gap between the start time of the current first time window and the 1st OFDM symbol of the 1st uplink transmission following the start time that is terminated or canceled; wherein
the first time window consists of a set of actually available slots, symbols, or repetitions for the uplink transmission, wherein the set of actually available slots, symbols, or repetitions is semi-persistently or dynamically configured.

23. An apparatus for determining an uplink transmission time window, applied to a network-side device and comprising:
a sending module configured to send a first indication to a terminal, wherein the first indication is used to determine a first time window in which one or more uplink transmissions satisfy a first transmission characteristic.

24. A terminal, comprising a processor, a memory, and a program or instructions stored in the memory and capable of running on the processor, wherein when the program or instructions are executed by the processor, the steps of the method for determining an uplink transmission time window according to any one of claims 1 to 15 are implemented.

25. A network-side device, comprising a processor, a memory, and a program or instructions stored in the memory and capable of running on the processor, wherein when the program or instructions are executed by the processor, the steps of the method for determining an uplink transmission time window according to any one of claims 16 to 18 are implemented.

26. A readable storage medium, wherein the readable storage medium stores a program or instructions, and when the program or instructions are executed by a processor, the steps of the method for determining an uplink transmission time window according to any one of claims 1 to 15 or the method for determining an uplink transmission time window according to any one of claims 16 to 18 are implemented.

27. A chip, comprising a processor and a communication interface, wherein the communication interface is coupled to the processor, and the processor is configured to run a program or instructions to implement the steps of the method for determining an uplink transmission time window according to any one of claims 1 to 15 or the method for determining an uplink transmission time window according to any one of claims 16 to 18.

28. A computer program product, wherein the program product is stored in a non-volatile storage medium, and the program product is executed by at least one processor to implement the steps of the method for determining an uplink transmission time window according to any one of claims 1 to 15 or the method for determining an uplink transmission time window according to any one of claims 16 to 18.
